# EUROPÄISCHE PATENTSCHRIFT

(11) **EP 1 323 984 B1**
(45) Veröffentlichungstag und Bekanntmachung des Hinweises auf die Patenterteilung: **19.04.2006**
(21) Anmeldenummer: 02027716.6
(22) Anmeldetag: 11.12.2002
(51) Int. Cl.: F24D 19/10, F04D 15/00

(54) **Verfahren zum Steuern einer drehregelbaren Heizungsumwälzpumpe**
Method for controlling a variable speed circulation pump for heating system
Procédé de contrôle pour une pompe de circulation de chauffage avec vitesse variable

(30) Priorität: 24.12.2001 DE 10163989
(43) Veröffentlichungstag der Anmeldung: 02.07.2003
(60) Teilanmeldung: 05026407.6
(73) Patentinhaber: GRUNDFOS A/S, DK-8850 Bjerringbro (DK)
(72) Erfinder: Vadstrup, Pierre, 8381 Tilst (DK); Enevoldsen, Lars R., 8382 Hinnerup (DK)
(74) Vertreter: Vollmann, Heiko

(56) Entgegenhaltungen:
- EP-A- 0 726 396
- EP-A- 0 736 826
- DE-A- 3 508 049
- DE-A- 3 704 756
- DE-A- 4 239 929
- DE-A- 4 312 150
- DE-A- 19 525 887
- DE-A- 19 611 075
- DE-C- 350 741
- KUNZ U: "TOMORROW'S PUMP CONTROL SYSTEMS" WORLD PUMPS, TRADE AND TECHNICAL PRESS LTD. MORDEN, GB, Nr. 340, 1995, Seiten 25-29, XP000486932 ISSN: 0262-1762

## Beschreibung

Die Erfindung betrifft ein Verfahren zum Steuern einer drehzahlregelbaren Heizungsumwälzpumpe gemäß den im Oberbegriff des Anspruchs 1 angegebenen Merkmalen sowie eine elektromotorisch angetriebene Heizungsumwälzpumpe zur Ausführung des vorerwähnten Verfahrens gemäß den im Oberbegriff des Anspruchs 14 angegebenen Merkmalen.

Bei Heizungsumwälzpumpen, insbesondere für Heizungsanlagen kleiner und mittlerer Leistung, beispielsweise für Einfomilienhäuser, ist es bekannt, die Leistung der Pumpe mittels eines Stufenschalters manuell zu steuern. Wenn nicht eine regelmäßige Anpassung der Schaltstufen an die erforderliche Fördermenge bzw. die erforderliche Förderhöhe erfolgt, muss die Scholtstellung so gewählt werden, dass alle erdenklichen Leistungsfälle, also auch die von der Pumpe zu fördemde Maximalleistung abgedeckt sind. Dies führt dazu, dass das Aggregat in der meisten Zeit mit viel zu hoher Leistung gefahren wird, was innerhalb der Heizungsanlage einerseits zu Geräuschentwicklungen führen kann und darüber hinaus unnötig hohe Energiekosten bedingt.

Insofern günstiger sind Heizungspumpenaggregute mit Differenzdrucksteuerung, welche üblicherweise auf einer vorgegebenen Regelkurve betrieben werden. Derartige Heizungsumwälzpumpenaggregate sind heutzutage mit einem Drehzahlsteller gesteuert, so dass die Pumpe in jedem beliebigen Punkt eines Kennfeldes betreibbar ist, Aus DE 195 25 887 A1 ist es bekannt, ein solches hydraulisches Leistungsfeld entsprechend den Erfordernissen der jeweiligen Heizungsanlage anzupassen, um so das Pumpenaggregat nach Möglichkeit energetisch günstig zu betreiben. Aus EP 0 736 826 B 1 ist es bekannt, die Leistungssteuerung für das Pumpenaggregat temperaturabhängig zu fahren. Diese Art der Steuerung nutzt die bei modernen Heizungsanlagen vorhandene außentemperaturgeführte Steuerung der Vorlauftemperatur aus, welche in Abhängigkeit des Wärmebedarfs die Vorlauftemperatur regelt.

Aus DE 37 04 756 A1 ist es bekannt, die Pumpenregelung in Abhängigkeit der Strömungsgeschwindigkeit im Heizungsrücklauf anzupassen. Hierzu ist jedoch ein gesonderter Strömungsmesser in der Rücklaufleitung und eine entsprechende Signalverbindung zur Pumpensteuerung vorzusehen, was aufwendig ist.

Allen vorgenannten Systemen gemeinsam ist, dass das Pumpenaggregat als unabhängiges Aggregat innerhalb der Heizungsanlage betrieben wird, sich also nur indirekt und bisher unzureichend an den tatsächlichen Anlagenbedarf anpassen kann. Eine exakte Abstimmung auf die heizungsanlagenseitigen Anforderungen wäre zwar möglicherweise noch durch Anbindung der Pumpensteuerung an die Heizungsanlagensteuerung/-regelung möglich, dies wäre jedoch verhältnismäßig aufwändig, da es keine einheitliche Schnittstelle gibt und für jede Heizungsanlage eine gesonderte Steuerung für die Pumpe erforderlich wäre. Darüber hinaus wäre eine elektrische Verbindung zwischen Pumpenaggregat und der Heizungsanlagensteuerung/-regelung erforderlich, was den Installationsaufwand zusätzlich erhöhen würde. Schließlich könnten auch mit solch einer erweiterten Steuerung heizungsanlagenseitige Änderungen, wie sie insbesondere durch die wärmebedarfgesteuerten Thermostatventile erfolgen, ebenfalls nicht erfasst werden.

Aus DE 43 12 150 A1 ist es bereits bekannt, die Pumpensteuerung an die Heizungsanlagensteuerung anzubinden. Jedenfalls ist dort ein Regler vorgesehen, der nicht nur den Elektromotor der Pumpe, sondern auch einen das Mischventil steuernden Elektromotor ansteuert. Hierdurch kann zwar die Pumpenleistung besser an den Wärmebedarf der Anlage angepasst werden, doch erfordert dies eine recht komplexe Regelung die nicht nur aufwendig und teuer ist, sondern auch nur als komplexe Anlagenlösung und nicht als Insellösung in Form eines autark arbeitenden Pumpenaggregats realisierbar ist.

Vor diesem Hintergrund liegt der Erfindung die Aufgabe zugrunde, ein gattungsgemäßes Verfahren zum Steuern einer drehzahlregelbaren Heizungsumwälzpumpe zu schaffen, bei dem das Pumpenaggregat zwar nach wie vor unabhängig von der Heizungsanlagen- bzw. Kesselsteuerung/-regelung arbeitet, jedoch die heizungsanlagenspezifischen Charakteristika und deren Änderungen besser berücksichtigt, um einerseits das Pumpenaggregat möglichst effizient zu betreiben, und andererseits die Heizungsanlage stets ausreichend zu versorgen. Darüber hinaus soll ein entsprechendes Pumpenaggregat mit einer solchen Steuerung/Regelung insbesondere zur selbsttätigen Ausführung dieses Verfahrens geschaffen werden.

Der verfahrensmäßige Teil dieser Aufgabe wird durch die in Anspruch 1 angegebenen Merkmale gelöst, Anspruch 15 beschreibt eine entsprechende Heizungsumwälzpumpe. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, eine verbraucherseitige Vertaufscharakteristik zur Ermittlung der heizungsanlagenseitig erforderlichen Förderleistung heranzuziehen und die Pumpe entsprechend in ihrer Leistung anzupassen. Eine verbrauchsseitige Verlaufscharakteristik im Sinne der Erfindung ist typischerweise der Verlauf des Förderdrucks (auch Förderhöhe genannt) der Pumpe. Alternativ kann auch die Fördermenge herangezogen werden, da bei gegebener Drehzahl der Pumpe auch daraus der Förderdruck ableitbar ist. Schließlich kann diese Verlaufscharokteristik auch anhand einer elektrischen Größe, beispielsweise der Leistungsaufnahme des die Pumpe antreibenden Motors abgeleitet werden. Die vorliegende Erfindung geht im Grundgedanken davon aus, dass die von der Pumpe zur erbringende Förderleistung abhängig ist von den Wärmebedarf bestimmenden Ereignissen in der Heizungsanlage und deren Umgebung. Im Unterschied zum Stand der Technik wird gemäß der Erfindung die Leistungsanpassung der Pumpe jedoch nicht anhand eines konkreten Wertes, sondern anhand der zeitlichen Änderung, also des Verlaufs dieses Wertes vollzogen, wobei die Erfassung der verbrauchsseitigen Verlaufscharakteristik das Erkennen und Zuordnen heizungsanlagentypischer Ereignisse beinhaltet, welche die daraus für die Pumpensteuerung ableitbären Eingriffe wesentlich gezielter und hinsichtlich der anlageseitigen Anforderungen besser erfüllen kann.

In Kenntnis dieser anhand der Verlaufscharakteristik ermittelten typischen Ereignisse wird die Drehzahl der Pumpe angepaßt. Anders als bei einer Regelung nach dem Stand der Technik , bei der auf einer Regelkurve gefahren wird, wird beim erfindungsgemäßen Verfahren beim Erreichen eines bestimmten Wertes, beispielsweise einer Förderhöhe steuerungsseitig unterschiedlich reagiert in Abhängigkeit des zeitlichen Verlaufs dieses Wertes, d. h. in Abhängigkeit des damit verbundenen Ereignisse. Es kann auf diese Weise eine regelkurvenfreie Steuerung der Anlage erfolgen, wobei in Weiterbildung der Erfindung nicht nur die verbraucherseitige Verlaufscharokteristik sondern auch noch die Größe der Änderung herangezogen werden kann, um entsprechend korrigierend in die Pumpesteuerung einzugreifen.

Eine typische Verlaufscharakteristik ist beispielsweise einer periodische Druckänderung, und zwar im Stundenbereich. Eine solche periodische Druckänderung tritt regelmäßig dann auf, wenn die Heizungsanlage pumpenseitig überversorgt ist. Dann nämlich öffnen und schließen die Thermostatventile in mehr oder weniger regelmäßigen Abständen und nehmen nicht einen bevorzugten mittleren Öffnungsgrad ein. Dieser Zustand kann durch Erfassung des Druckverlaufs der Pumpe im Stundenbereich ermittelt werden, die Drehzahl wird dann abgesenkt, bis diese periodische Druckänderung nicht mehr auftritt.

Eine weitere typische Verlaufscharakteristik ist durch eine schnelle Druckänderung im Bereich unter 5 Minuten vorzugsweise unter 1 Minute gegeben. Gemäß der Erfindung wird bei dieser Verlaufscharakteristik die Drehzahl bei einer Druckerhöhung abgesenkt und bei einem Druckabfall angehoben. Diese schnelle Druckänderung innerhalb des Systems ist typisch für einen manuellen Eingriff an einem oder mehreren Thermostatventilen der Heizungsanlage, weshalb eine sofortige Drehzahländerung, wie sie das erfindungsgemäße Verfahren vorsieht, sinnvoll ist, um die Pumpenleistung an den geänderten Durchflußbedarf und somit Wärmebedarf der Anlage anzupassen.

Eine weitere typische Verloufscharakteristik gemäß der Erfindung ist eine mittelschnelle Druckänderung im Bereich zwischen 6 Minuten und 5 Stunden. Sobald eine solche Druckänderung ermittelt wird, sieht das erfindungsgemäße Verfahren vor, die Drehzahl bei Druckerhöhung während der Zeit, in der eine Druckerhöhung erfolgt, abzusenken und bei Druckabfall zumindest zeitweise während des Druckabfalls abzusenken. Eine solche mittelschnelle Druckänderung tritt typischer Weise auf, wenn beispielsweise ein Fenster oder eine Tür geöffnet wird oder aber ein Raum in dem von der Heizungsanlage versorgten Bereich durch Sonneneinstrahlung erwärmt wird. Dabei tritt bei Sonneneinstrahlung typischerweise eine Druckerhöhung ein, da das Thermostatventil in dem erwärmten Raum schließt. Das erfindungsgemäße Verfahren sieht in diesem Fall vor, die Drehzahl der Pumpe abzusenken, allerdings nur für den Zeitraum der Ereignisses, da genau dann der Wärmebedarf der Heizungsanlage geringer ist.

Für das Ereignis des Fensteröffnens hingegen, bei dem der Druck in der Heizungsanlage abfällt, da das entsprechende Thermostatventil öffnet, sieht das erfindungsgemäße Verfahren nicht wie Regelungen nach dem Stand der Technik vor, die Drehzahl der Pumpe zu erhöhen, da es nicht sinnvoll ist, bei geöffneten Fenster den Heizkörper vermehrt zu erwärmen, sondern nimmt ebenfalls die Drehzahl zurück, um gerade während der Zeit des geöffneten Fensters die Fördermenge abzusenken. Allerdings erfolgt diese Absenkung nur während des Druckabfalls oder während einer gewissen Zeit während des Druckabfalls, da das erfindungsgemäße Verfahren davon ausgeht, dass spätestens dann, wenn der Druck wieder ansteigt, das Fenster bereits wieder geschlossen sein muß und dann der Raum wieder aufzuheizen, also der erhöhte Wärmebedarf durch Erhöhung der Drehzahl zu kompensieren ist.

Ein weiteres typisches Ereignis, dass mit dem erfindungsgemäßen Verfahren ermittelt werden kann, ist die heizungsanlagenseitig üblicherweise erfolgende Nachtabsenkung der Vorlauftemperatur. Auch diese Absenkung führt zu einer Druckänderung. Das erfindungsgemäße Verfahren ermöglicht es also ausschließlich durch den Druckverlauf den Tag - Nacht -Rhythmus der Heizungsanlage zu erkennen und die Drehzahl entsprechend anzupassen, d. h. bei geringerem Wärmebedarf während der Nacht abzusenken.

Ein weiteres typisches Ereignis, ist eine langsame Druckänderung im Bereich zwischen sechs Monaten und einem Jahr. Sobald eine solche Druckänderung erfaßt wird, wird gemäß der Erfindung die Drehzahl im Falle einer Druckerhöhung abgesenkt und im Falle eines Druckabfalls angehoben. Das vorgenannte Ereignis entsprich dem Wechsel der Jahreszeiten, insbesondere dem Sommer/Winterrhythmus. Die Absenkung der Drehzahl im Sommer bzw. Anhebung im Winter entspricht dem Wärmebedarf der Anlage.

Die Größe der Drehzahländerung wird bevorzugt in Abhängigkeit von Art und Größe des ermittelten Ereignisses gewählt, also in Abhängigkeit der ermittelten Druckänderung oder gegebenenfalls auch andere Größen, wie beispielsweise der Temperatur.

In einer Weiterbildung der Erfindung sieht das Verfahren vor, die Pumpe zur Erfassung mindest eines heizungsanlagenseitigen Kennwertes nacheinander mit mindestens zwei unterschiedlichen Drehzahlen anzusteuern. Das Verfahren steuert die Pumpe, d. h. deren Drehzahl also aktiv von unabhängig von den zuvor beschrieben Ereignissen Kennwerte der Heizungsanlage zu ermitteln. So ist es für die Festlegung des aktuellen Betriebspunktes, also der aktuellen Drehzahl der Pumpe zweckmäßig eine möglichst flache und eine möglichst steile Rohrnetzkennlinie der Heizungsanlage zu erfassen, um die Pumpe einerseits in einem energetisch günstigen Bereich zu betreiben und andererseits die Heizungsanlage ausreichend zu versorgen. Es ist daher gemäß der Erfindung vorgesehen, die Pumpe gezielt mit einer niedrigen Drehzahl zur Unterversorgung und zu gegebener anderer Zeit mit einer höheren Drehzahl zur gezielten Überversorgung der Heizungsanlage anzusteuern,und dabei jeweils eine entsprechende Zeit abzuwarten, bis sich ein weitgehend stabiler Betriebspunkt eingestellt um dann anhand dieses Betriebspunktes eine flache bzw. steile Rohrnetzkennlinie zu ermitteln, welche zur Wahl einer geeigneten aktuellen Betriebsdrehzahl herangezogen werden können.

Um den normalen Betrieb der Heizungsanlage durch diese aktive Steuerung nicht unnötig zu belasten ist es zweckmäßig, zunächst die Pumpe mit einer zu erwartenden bedarfsgerechten Drehzahl anzusteuern und die nachfolgend angesteuerte Drehzahl so zu wählen, dass eine zur Anlagenanalyse geeignete Abweichung vom vorherigen Betriebspunkt gegeben ist. Zeitlich erfolgt beispielsweise die Ermittlung einer flachen Rohrnetzkennlinie während der Nachtabsenkung, wenn der Wärmebedarf der Anlage ohnehin gering ist, umgekehrt die Ermittlung einer steilen Rohrnetzkennlinie bei hohem Wärmebedarf, zum Beispiel in den Morgenstunden.

Um einerseits den normalen Heizungsanlagenbetrieb nicht Übergebühr zu behindern, andererseits ober auch im zeitlichen Verlauf des Anlagenbetriebs möglichst exakte anlagenseitige Kennwerte zu erfassen, ist es zweckmäßig, die Anpassung der Pumpensteuerung im Ein- oder Mehrtagesintervall zu wiederholen, insbesondere auch im Hinblick auf die Ermittlung einer flachen Rohrnetzkennlinie während der Nachtabsenkung.

Um die Pumpe auch bei niedrigen Drehzahlen in energetisch günstigen Bereichen betreiben zu können, was insbesondere bei Pumpenaggregaten mit Permanetmagnetmotor zweckmäßig sein kann, ist gemäß der Erfindung weiter vorgesehen, die Pumpe zur Ermittlung der Durchflußsperre anzusteuern. Hierzu wird die Drehzahl entweder von Null oder nahe Null steigend oder auf Null oder auf nahe Null fallend angesteuert und der Druchfluß erfaßt. Es kann wegen des Zusammenhangs zwischen Förderhöhe und Fördermenge auch die Förderhöhe erfaßt werden. In dem Drehzahlbereich, in dem kein Durchfluß ermittelbar ist, wird das Kennfeld der Pumpe steuerungsseitig gesperrt, um sicherzustellen, dass die Pumpe nicht mit einer Drehzahl angesteuert wird, welche unter der Drehzahl liegt, die mindestens erforderlich ist, um die ermittelte Durchflußsperre zu überwinden. Alternativ kann die Ermittlung der Durchflußsperre auch durch Ermittlung einer Rohrnetzkennlinie der Heizungsanlage erfolgen. Wenn die Auswertung dieser Rohrnetzkennlinie einen Schnittpunkt im H-Q-Diagramm mit der Ordinate deutlich über Null ergibt, ist eine solche Durchflußsperre ebenfalls vorhanden und der unter diesem Schnittpunkt liegende Bereich des Kennfeldes zu sperren.

Grundsätzlich arbeitet das erfindungsgemäße Verfahren ausschließlich über Druckerfassung, d. h. alle für die erfindungsgemäße Steuerung wesentlichen Ereignisse können durch ausschließliche Druckerfassung - die Drehzahl steht steuerungsseitig ohnehin zur Verfügung - ermittelt werden. Es kann jedoch in bestimmten Anwendungsfällen von Vorteil sein, darüber hinaus auch die Temperatur oder den Temperaturverlauf des Fördermediums heranzuziehen, sei es, nur um die Zuordnung des Ereignisses mit höherer Wahrscheinlichkeit bestimmen zu können oder auch um andere Ereignisse zu ermitteln.

Darüber hinaus können zur Leistungssteuerung der Pumpe zusätzlich klimatische und/oder zeitliche Information herangezogen werden. So ist es denkbar, bei vernetzten Systemen, beispielsweise bei einer Heizungsumwälzpumpe mit Internetanbindung, entsprechende Daten der Temperatur- und Windvorhersage in die Pumpensteuerung einfließen zu lassen. Auch können zeitlichen Informationen, beispielsweise über die Kesselsteuerung mit zur Drehzahlsteuerung herangezogen werden.

Das erfindungsgemäße Verfahren kann ohne weiteres in der Steuer- und Regelelektronik einer modernen drehzahlregelbaren Heizungsumwälzpumpe integriert werden. Zweckmäßigerweise erfolgt die Erfassung verbrauchsseitiger Verlaufscharakteristiken in digitaler Form, so dass die Zuordnung anlagentypischer Ereignismuster und die damit gemäß dem erfindungsgemäßen Verfahren vorgesehenen Eingriffe in die Drehzahlsteuerung durch entsprechende Softwareimplementierungen in den Mikroprozessoren der Motorsteuerung/Regelung erfolgen können. Dabei wird für die Zuordnung der Ereignisse bevorzugt Fuzzy-Logik eingesetzt, um auch dann, wenn keine unmittelbare Übereinstimmung mit einer ermittelten Veriaufscharakteristik und einem vorgegebenen Ereignismuster festzustellen ist, mit hoher Wahrscheinlichkeit die richtige Zuordnung zu treffen und entsprechend korrigierend in die Drehzahlsteuerung eingreifen zu können.

Zweckmäßigerweise ist die Steuer- und Regelelektronik des Aggregats dabei so ausgebildet, dass die Pumpe in zeitlichen Abständen selbsttätig sich vom aktuellen Betriebspunkt unterscheidende Betriebepunkte anfährt um mindest einen Kennwert des Rohrnetzes der Heizungsanlage zu ermitteln, wobei anhand des ermittelten Kennwerts die akutelle Drehzahl der Pumpe selbsttätig gewählt wird. Die Steuerung/Regelung umfaßt also ein Programm, das durch gezielte Drehzahlansteuerung charakteristische Werte der Heizungsanlage erfaßt, um dann die Drehzahl der Pumpe in einen dem Wärmebedarf der Anlage entsprechenden möglichst energetisch günstigen Bereich zu legen.

Die Steuerung/Regelung der Heizungsumwälzpumpe gemäß der Erfindung ist so ausgelegt, dass die Ansteuerung mit sich vom aktuellen Betriebspunkt unterscheidenden Drehzahlen bevorzugt über einen Zeitraum von 1 bis 30 Minuten erfolgt. Die Zeitspanne soll so gewählt sein, dass sich das System auf die neue Förderleistung einstellen kann, d. h. die daraus resultierte geänderte Rohrnetzkennlinie erfaßbar ist, andererseits so kurz wie möglich, um den regulären Heizungsbetrieb möglichst wenig zu stören.

Die Heizungsumwälzpumpe gemäß der Erfindung weist vorteilhaft Mittel zum Erfassen des Drucks, vorzugsweise des Differenzdrucks zwischen Saug- und Druckseite, der Durchflußmenge und/oder der Temperatur des Fördermediums auf. Zwar genügen zur Ermittlung des aktuellen Betriebspunkts grundsätzlich die Erfassung der Drehzahl sowie der Leistungsaufnahme des Motors, doch kann es je nach eingesetztem Motor günstiger sein, diese Werte durch Einsatzes eines Differenzdruckmessers und/oder eines Durchflußmessers innerhalb des Pumpenaggregats gegebenenfalls auch zusätzlich zur Kontrolle zu erfassen. Dies gilt insbesondere beim Einsatz von Asychonmotoren, bei denen im niedrigen Drehzahlbereich die Ermittlung des Betriebspunktes anhand der elektrischen Größen problematisch sein kann.

Zur Erfassung derverbroucherseitigen Verlaufscharakteristik werden bevorzugt Drehzahl und Förderdruck herangezogen In der Steuer- und Regelelektronik sind darüber hinaus Mittel zum Bestimmen anlagenseitiger Veränderung und zum Zuordnen dieser Veränderungen zu einer vorgegebenen Zahl von Veränderungsmustern vorgesehen. Diese Mittel zum Bestimmen und Zuordnen arbeiten zweckmäßigerweise mit Fuzzy-Logik, welche die Bestimmung und Zuordnung auch bei nicht identischer Übereinstimmung ermöglicht. Um die Ereignisse, d. h. die anlagenseitigen Veränderungen zu bestimmen und den in der Steuer- und Regelelektronik abgespeicherten Mustern zuzuordnen ist es zweckmäßig, in der Steuer-und Regelelektronik Mittel zum zeitlichen differenzieren der Veränderungen vorzusehen. Auf diese Weise können die Ereignisse kategorisieret werden, was deren Zuordnung wesentlich erleichtert. Vorzugsweise werden diese anlagenseitigen Veränderungen in lang-, mittel- und kurzfristig Veränderungen eingeteilt denen dann jeweils nur ein oder wenige Verönderungsmuster gegenüber zu stellen sind um eine geeignete Zuordnung zu erhalten.

Zweckmäßigerweise wird die gesamte Steuerungs- und Regelungselektronik einschließlich der in diesem Zusammenhang erforderlichen digitalen Bausteine (Mikroprozessoren) im Klemmenkasten des Pumpenaggregats angeordnet, vorzugsweise in Baueinheit mit der übrigen Steuer-und Regelelektronik des die Pumpe antreibenden Elektromotors bzw. dessen Drehzahlstellers. Auf diese Weise wird nicht nur eine kompakte Bauweise erreicht, sondern auch eine zusätzliche Kapselung der entsprechenden Bauteile entbehrlich, da der Klemmenkasten als solcher einen dichten Abschluss und guten mechanischen Schutz nach außen hin bildet.

Die Erfindung ist nachfolgend anhand von Ausführungsbeispielen näher erläutert. Es zeigen:
- Fig. 1: die Erfassung kurzfristiger Ereignisse anhand des Druckverlaufs, die Zuordnung zu vorbekannten Mustern und die entsprechende Drehzahlsteuerung,
- Fig. 2: die Erfassung eines mittelfristigen Ereignisses anhand des Druckverloufs, die Zuordnung zu einem bekannten Muster und die Drehzahlsteuerung aufgrund dieses Ereignisses
- Fig. 3: die Erfassung eines langfristigen Ereignisses über den Druckverlauf, die Zuordnung zu einem vorgegebenen Muster sowie die entsprechende Drehzahlsteuerung.

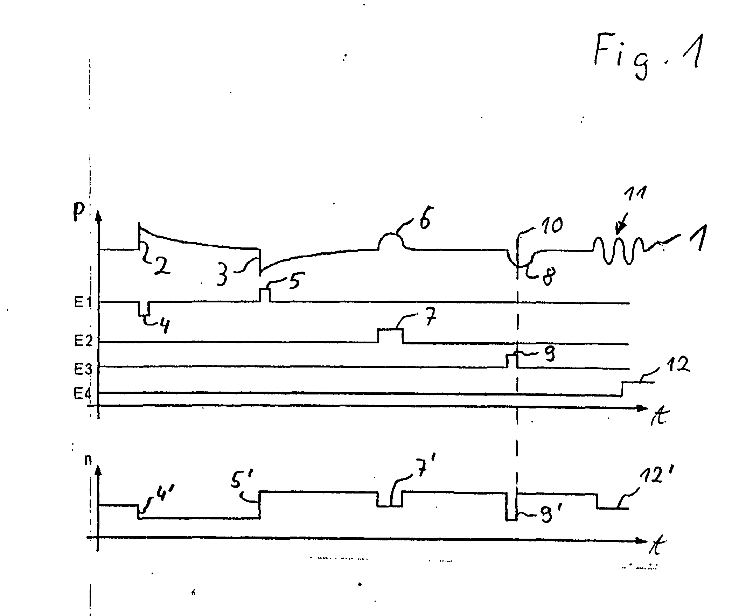

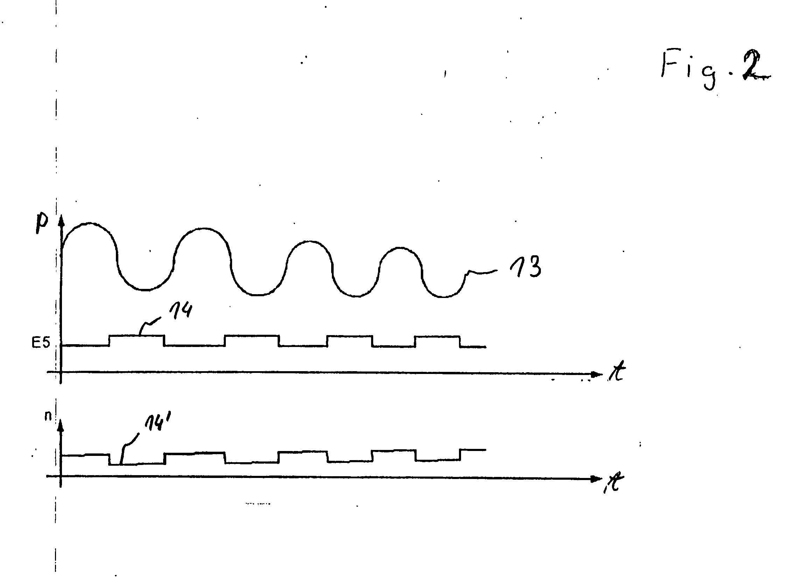

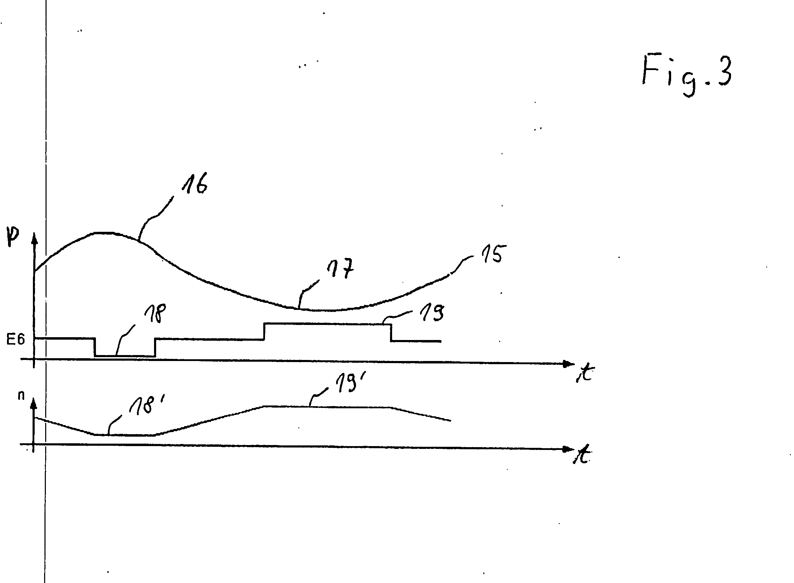

Anhand der in den Fig. 1 bis 3 dargestellten Druckverläufe wird nachfolgend beispielhaft erläutert, wie anlagentypische Ereignisse zunächst durch zeitliche Differenzierung unterschieden, vorgegbenen Ereignissmustern zugeordnet werden und welche steuerungsseitigen Änderungen insbesondere der Drehzahl des die Pumpe antreibenden Motors hierauf erfolgen. In den Darstellungen gibt jeweils die Abzisse die Zeit wieder, und zwar in Fig. 1 einen Tag, in Fig. 2 eine Woche und in Fig. 3 ein Jahr, auf der Ordinate ist in der obersten Kurve jeweils der Druckverlauf, darunter ein oder mehrere logische Zuordnungsbausteine (Detektoren) sowie zu unterst die daraus resultierende Drehzahländerung dargestellt.

Die in Fig. 1 oberste Kurve stellt beispielhaft den Druckverlauf einer Heizungsanlage während eines Tages dar. Der Druckverlauf gemäß Kurve 1 ist gekennzeichnet durch einen steilen Anstieg 2, der nachfolgend langsam wieder auf den ursprünglichen Druck abfällt um dann in einen steilen Druckabfall 3 überzugehen, der dann wieder bis auf den Ursprungsdruck ansteigt. Die mit 2 und 3 gekennzeichneten spontanen Druckänderungen resultieren aus manuellen Ventileingriffen. Bei der Druckänderung 2 ist ein Thermostatventil geschlossen, bei der Druckänderung 3 ein Thermostatventil geöffnet worden. Zur Erfassung dieser spontanen Druckänderungen ist ein digitaler Detektor E 1 vorgesehen, welcher Druckänderungen im Bereich von weniger als 5 Minuten erfaßt. Wird eine solche schnelle Druckänderung, welche auf die Betätigung eines oder mehrerer Thermostatventile hindeutet, erfaßt, gibt der Detektor E 1 bei Druckanstieg 2 ein negatives Signal 4 und bei Druckabfall 3 ein positives Signal 5. Das Signal 4 bewirkt eine Drehzahlabsenkung 4', das Signal 5 eine Drehzahlanhebung 5' in der Steuerung der Pumpe.

Ein weiterer Detektor E 2 ist vorgesehen, um kurzfristige Druckänderungen zu erfassen, welche Ereignisse charakterisieren, die durch Sonneneinstrahlung bedingt sind. Ein solches Ereignis ist in der Kurve 1 mit 6 gekennzeichnet. Sonneneinstrohlungs bedingt erwärmt sich der Raum, wonach das Thermostatventil langsam schließt und nachfolgend wieder langsam öffnet, wenn die Sonneneinstrahlung nachläßt. Der Detektor E 2 detektiert Druckänderungen in einem Zeitfenster zwischen 6 Minuten und 5 Stunden und gibt ein Signal 7 solange ab, wie er diese für Sonneneinstrahlung typische Druckerhöhung aufgrund schließender Thermostatventile feststellt. Die Pumpensteuerung reagiert hierauf mit einer Drehzahlabsenkung 7', und zwar solange, wie das Signal 7 ansteht. Danach wird die Drehzahl wieder auf den ursprünglichen Wert angehoben, da es sich hierbei nur um ein kurzfristiges Ereignis handelt, das keine weiteren Auswirkungen auf den Wärmebedarf der Anlage hat.

Ein weiter Detektor E 3 ist vorgesehen, um kurzfristige Ereignisse zu ermitteln, welche auf Ventilation zurückzuführen sind, wie sie beim Öffnen von Fenstern oder Türen auftreten. Das Zeitfenster dieses Detektors beträgt ebenfalls 6 Minuten bis 5 Stunden. Eine Druckänderung, wie sie beim Öffnen eines Fensters und nachfolgendem Schließen typisch ist, ist in der Kurve I mit 8 angegeben. Mit Öffnen des Fensters fällt der Druck zunächst langsam ab, da das Thermostatventil im Raum öffnet. Nach dem Schließen des Fensters steigt der Druck dann wieder an, bis das Thermostatventil wieder in den ursprünglichen Zustand zurückgefallen ist. Der Detektor E 3 gibt ein Signal 9 jedoch nur solange ab, wie er ein den bei geöffnetem Fenster typischen Druckabfall registriert, sobald der Druck wieder ansteigt, in Kurve 1 ist dieser Zeitpunkt mit 10 beziffert, gibt der Detektor E 3 kein Signal mehr ab, da dann, wenn der Druck wieder ansteigt, das Fenster längst geschlossen ist und somit ein weiterer Eingriff zur Berücksichtigung dieses Ereignisses in der Pumpensteuerung nicht mehr sinnvoll wäre. Wie sich anhand der Drehzahlabsenkung 9' ergibt, wird solange wie der Detektor E 3 ein Signal abgibt, die Drehzahl der Pumpe, anders als beim Stand der Technik, nicht angehoben sondern abgesenkt. Dieser Steuerung liegt die Überlegung zugrunde, dass die Heizungsanlage während Lüftungsaktionen nicht verstärkt, sondern eher vermindert versorgt werden sollte, da es nicht sinnvoll ist, während dieser Zeit vermehrt Wärme zuzuführen, die durch das geöffnete Fenster ohnehin entweichen würde.

Ein weiterer Sensor E 4 ist vorgesehen, der kurzfristige Druckänderungen erfaßt, also ein Zeitfenster vom Minuten- bis Stundenbereich aufweist. Der Detektor E 4 dient zur Erfassung periodischer Druckänderungen, wie sie in der Kurve 1 durch die Druckänderungen 11 dargestellt sind. Sobald der Detektor E 4 eine periodische Druckänderung feststellt gibt er ein Signal 12 ab, das steuerungsseitig zu einer dauerhaften Drehzahlabsenkung 12' führt. Der Detektor E 4 ermittelt somit Schwingungen im Druckverlauf, die dadurch entstehen, dass die Thermostatventile kurzfristig öffnen und schließen, was auf eine Überversorgung hinweist. Konsequent erfolgt daher eine dauerhafte Drehzahlabsenkung 12' um dieses Ereignis zukünftig zu vermeiden.

In Fig. 2 ist auf der Zeitachse der Zeitraum einer Woche dargestellt. Ein Detektor E 5 bestimmt Ereignisse in einem Zeitfenster von einem Tag bis zu einer Woche. Die Kurve 13 kennzeichnet den Druckverlauf innerhalb der Heizungsanlage während einer Woche. Es wird deutlich, dass auch hier eine periodische Druckänderung vorliegt, die jedoch anders als bei 11 nicht im Stunden- sondern im Tagesbereich liegt. Der Detektor E 5 ermittelt diese mittelfristige Druckänderung und gibt bei Druckabfall ein Signal 14, währenddessen die Drehzahl abgesenkt wird, die entsprechende Drehzahlabsenkung ist mit 14' gekennzeichnet. Bei dem Detektor E 5 handelt es sich um einen Detektor zur Erfassung von Tag und Nacht, insbesondere zur Erfassung der Absenkung der Vorlauftemperatur während der Nacht. Wenn dieses detektiert wird, wird auch die Drehzahl der Pumpe abgesenkt, davon ausgehend, dass dann der Wärmebedarf der Heizungsanlage und damit auch der Förderbedarf der Pumpe vermindert ist.

In Fig. 3 ist auf der Zeitachse ein Jahr dargestellt, der Detektor E 6 ist zur Ermittlung von Sommer und Winter vorgesehen. Er detektiert somit Ereignisse in einem Zeitfenster von sechs Monaten bis zu einem Jahr. Die Kurve 15 zeigt den Druckverlauf der Heizungsanlage während eines Jahres, dabei ist in einem Bereich 16 erhöhter Druck und in einem Bereich 17 niedrigerer Druck festzustellen. Der erhöhte Druck resultiert aus den im Sommer im Wesentlichen schließenden Thermostatventilen. Der Detektor E 6 erfaßt dies und gibt während dieses den Sommer repräsentierenden erhöhten Drucks ein negatives Signal 18 ab, das zu einer Drehzahlabsenkung 18' führt, umgekehrt wird die Druckabsenkung 17 während der Wintermonate erkannt und mit einem positiven Signal 19 beantwortet, was wiederum zu einer Drehzahlerhöhung 19' in der Pumpensteuerung führt. Diese Drehzahlanpassungen berücksichtigen, dass im Sommer der Wärmebedarf der Anlage geringer ist und somit auch der Förderbedarf, im Winter umgekehrt.

Wie die vorstehenden Ausführungsbeispiele verdeutfichen, können die anlagentypischen Ereignisse zum Einen durch zeitliche Differenzierung und zum Anderen durch charakteristische Druckverläufe in den einzelnen Zeitfenstern bestimmt werden, wonach die Pumpensteuerung die Drehzahl entsprechend anpaßt. In den vorstehenden beschriebenen Beispielen ist die Größe der Anpassung, d. h. der Drehzahländerung nicht angegeben, es versteht sich, dass dies in Abhängigkeit der Amplituden der ermittelten Ereignisse und der Ereignisse selbst erfolgt.

Die vorbeschriebenen Detektoren E 1 bis E 6 werden zweckmäßigerweise in Form logischer Verknüpfungen gebildet. Die Drehzahl bestimmenden Ereignisse legen jedoch die Betriebsdrehzahl der Pumpe nicht zwingend ausschließlich fest, die charakteristischen Eigenschaften der Heizungsanlage, soweit es deren Rohrnetzwiderstände angeht, werden von der Pumpensteuerung selbsttätig ermittelt indem wie eingangs beschrieben eine möglichste flache und eine möglichste steile Rohrnetzkennlinie ermittelt oder anhand ermittelter Werte nachgebildet werden um dann den für den Betrieb der Pumpe energetisch sinnvollen Kennfeldbereich sowie eine erste Betriebsdrehzahl festzulegen, die dann in der vorbeschriebenen Weise mittels der Detektoren E 1 bis E 6 abgesenkt bzw. angehoben wird. Die Drehzahl wird also nicht längs einer konventionellen Regelkurve geführt, sondern in Abhängigkeit der ermittelten Ereignisse festlegt.

## Patentansprüche

1. Verfahren zum Steuern einer drehzahlregelbaren Heizungsumwälzpumpe, bei dem zumindest der Förderdruck oder die Fördermenge oder eine Größe, aus der letztere ableitbar sind, erfasst und zur anlagenabhöngigen Steuerung der Heizungsumwälzpumpe herangezogen wird, **dadurch gekennzeichnet, dass** zur Leistungsanpassung der Pumpe an die Heizungsanlage eine verbraucherseitige Verlaufscharakteristik des Förderdrucks oder der Fördermenge oder eine Größe, aus der letztere ableitbar sind, herangezogen wird und dass der ermittelten Verlaufscharakteristik den Wärmebedarf der Heizungsanlage beeinflussende typische Ereignisse zugeordnet werden und dass die Drehzahl der Pumpe entsprechend dieser Ereignisse angepasst wird.

2. Verfahren nach Anspruch 1, **dadurch gekennzeichnet, dass** bei Erfassung einer periodischen Druckänderung das Pumpenaggregat mit niedrigerer Drehzahl angesteuert wird.

3. Verfahren nach einem der vorhergehenden Ansprüche, **dadurch gekennzeichnet, dass** bei einer schnellen Druckänderung im Bereich unter fünf, vorzugsweise unter einer Minute die Drehzahl bei Druckerhöhung abgesenkt und bei Druckabfall angehoben wird.

4. Verfahren nach einem der vorhergehenden Ansprüche, **dadurch gekennzeichnet, dass** bei einer mittelschnellen Druckänderung im Bereich zwischen sechs Minuten und fünf Stunden die Drehzahl bei Druckerhöhung während der Druckerhöhung abgesenkt und bei Druckabfall zumindest zeitweise während des Druckabfalls die Drehzahl abgesenkt wird.

5. Verfahren nach einem der vorhergehenden Ansprüche, **dadurch gekennzeichnet, dass** bei einer langsamen Druckänderung im Bereich zwischen sechs Monaten und einem Jahr die Drehzahl bei Druckerhöhung abgesenkt und bei Druckabfall angehoben wird.

6. Verfahren nach einem der vorhergehenden Ansprüche, **dadurch gekennzeichnet, dass** die Drehzahländerung in Abhängigkeit der Amplitude und/oder der Art des ermittelten Ereignisses gewählt wird.

7. Verfahren nach einem der vorhergehenden Ansprüche, **dadurch gekennzeichnet, dass** die Pumpe zur Erfassung mindestens eines heizungsanlagenseitigen Kennwertes nacheinander mit mindestens zwei unterschiedlichen Drehzahlen angesteuert wird.

8. Verfahren nach einem der vorhergehenden Ansprüche, **dadurch gekennzeichnet, dass** die Drehzahlen so gewählt sind, dass bei der niedrigeren Drehzahl eine Unterversorgung und bei der höheren Drehzahl eine Überversorgung der Heizungsanlage gegeben ist.

9. Verfahren nach einem der vorhergehenden Ansprüche, **dadurch gekennzeichnet, dass** die erste angesteuerte Drehzahl einem zu erwartenden bedarfsgerechten Betriebspunkt der Anlage entspricht und die nachfolgend angesteuerte Drehzahl so gewählt ist, dass eine zur Anlagenanalyse geeignete Abweichung vom vorherigen Betriebspunkt gegeben ist.

10. Verfahren nach einem der vorhergehenden Ansprüche, **dadurch gekennzeichnet, dass** die Pumpe zur Ermittlung einer Durchflusssperre vorzugsweise mit von Null steigender oder auf Null fallender Drehzahl angesteuert wird und dass der Drehzahlbereich, in dem kein Durchfluss ermittelbar ist, im Kennfeld der Pumpe steuerungsseitig gesperrt wird.

11. Verfahren nach einem der vorhergehenden Ansprüche, **dadurch gekennzeichnet, dass** zur Leistungssteuerung zusätzlich die Temperatur oder der Temperaturverlauf des zu fördemden Mediums herangezogen wird.

12. Verfahren nach einem der vorhergehenden Ansprüche, **dadurch gekennzeichnet, dass** zur Leistungssteuerung zusätzüche klimatische und/oder zeitliche Informationen herangezogen werden.

13. Verfahren nach einem der vorhergehenden Ansprüche, **dadurch gekennzeichnet, dass** die Ermittlung mindestens eines heizungsanlagenseitigen Kennwertes und die nachfolgende Anpassung der Pumpensteuerung im Ein- oder Mehrtagesintervall wiederholt wird.

14. Elektromotorisch angetriebene Heizungsumwälzpumpe mit einer Steuer- und Regelelektronik zur Ausführung des Verfahrens nach einem der vorhergehenden Ansprüche, **dadurch gekennzeichnet, dass** die Steuer- und Regelelektronik so ausgebildet ist, dass sie zur Leistungsanpassung der Pumpe an die Heizungsanlage eine verbroucherseitige Verlaufscharakteristik des Förderdrucks oder der Fördermenge oder eine Größe, aus der letztere ableitbar sind, heranzieht und dass die Steuer- und Regelelektronik der ermittelten Verlaufscharakteristik den Wärmebedarf der Heizungsanlage beeinflussende typische Ereignisse zuordnet und die Drehzahl der Pumpe entsprechend diesen Ereignissen anpasst.

15. Heizungsumwdlzpumpe nach Anspruch 14, **dadurch gekennzeichnet, dass** Mittel zum Erfassen von Druck, vorzugsweise dem Differenzdruck zwischen Saugseite und Druckseite, Durchflussmenge und/oder Temperatur des Fördermediums vorgesehen sind.

16. Heizungsumwälzpumpe nach einem der Ansprüche 14 oder 15 **dadurch gekennzeichnet, dass** die Ansteuerung mit sich vom aktuellen Betriebspunkt unterscheidenden Drehzahlen über einen Zeitraum von einer bis dreißig Minuten erfolgt.

17. Heizungsumwälzpumpe nach einem der Ansprüche 14 bis 16, **dadurch gekennzeichnet, dass** die Steuer- und Regelelektronik Mittel zum Bestimmen anlagenseitiger Veränderungen und zum Zuordnen dieser Veränderungen zu einer vorgegebenen Zahl von Veränderungsmustern aufweist.

18. Heizungsumwälzpumpe nach einem der Ansprüche 14 bis 17, **dadurch gekennzeichnet, dass** die Steuer- und Regelelektronik Mittel zum zeitlichen differenzieren der ermittelten anlageseitigen Veränderungen aufweist.

19. Heizungsumwälzpumpe nach einem der Ansprüche 14 bis 18, **dadurch gekennzeichnet, dass** Mittel vorgesehen sind, die anlagenseitige Veränderungen in vorzugsweise drei Kategorien einteilen, nämlich in lang-, mittel- und kurzfristige Veränderungen.

20. Heizungsumwälzpumpe nach einem der Ansprüche 14 bis 19, **dadurch gekennzeichnet, dass** die Steuer- und Regelelektronik vorzugsweise als Baueinheit im Klemmenkasten des Aggregats angeordnet ist.

## Claims

1. A method for controlling a variable speed heating circulation pump, with which at least the delivery pressure or the delivery quantity or a variable from which the latter may be derived, is acquired and used for the installation-dependent control of the heating circulation pump, **characterised in that** for adapting the power of the pump to the heating installation, one uses load-side behavioural characteristics of the delivery pressure or of the delivery quantity or of a variable from which the latter may be derived, and that typically events which influence the heating requirement of the heating installation are allocated to the evaluated behavioural characteristics, and that the rotational speed of the pump is adapted according to these events.

2. A method according to claim 1, **characterised in that** with the acquisition of the periodic pressure change, the pump assembly is activated with a lower rotational speed.

3. A method according to one of the preceding claims, **characterised in that** with a rapid change of pressure in the range below five minutes, preferably below one minute, the rotational speed is lowered given an increase in pressure, and is lifted given a drop in pressure.

4. A method according to one of the preceding claims, **characterised in that** with an averagely rapid pressure change in the region between six minute and five hours, the rotational speed, given an increase of pressure, is lowered during the pressure increase, and given a pressure drop, is lowered at least intermittently during the pressure drop.

5. A method according to one of the preceding claims, **characterised in that** with a slow change in pressure in the region between six months and one year, the rotational speed is lowered given a pressure increase, and is lifted given a pressure drop.

6. A method according to one of the preceding claims, **characterised in that** the change in rotational speed is selected in dependence on the amplitude and/or the type of the detected event.

7. A method according to one of the preceding claims, **characterised in that** the pump is activated consecutively with at least two different rotational speeds for acquiring at least one characteristic value on the heating installation side.

8. A method according to one of the preceding claims, **characterised in that** the rotational speeds are selected such that an undersupply of the heating installation is given with a lower rotational speed, and an oversupply is given with a higher rotational speed.

9. A method according to one of the preceding claims, **characterised in that** the first activated rotational speed corresponds to an expected operating point of the installation in accordance with the demands, and the subsequently activated rotational speed is selected such that a deviation from the previous operating point is given, said deviation being suitable for the analysis of the installation.

10. A method according to one of the preceding claims, **characterised in that** for detecting a throughflow block, the pump is activated with a rotational speed preferably increasing from zero or falling to zero, and that the rotational speed range in which no throughflow may be detected, is blocked in the family of characteristics of the pump, on the part of the control.

11. A method according to one of the preceding claims, **characterised in that** for the control of the power, one additionally uses the temperature or the temperature behaviour of the medium to be delivered.

12. A method according to one of the preceding claims, **characterised in that** uses additional climatic and/or temporal information for the control of the power.

13. A method according to one of the preceding claims, **characterised in that** the detection of at least one characteristic value on the heating installation side, and the subsequent adaptation of the pump control is repeated in a single-day or several-day interval.

14. A heating circulation pump driven by electric motor, with control and regulation electronics for carrying out the method according to one of the preceding claims, **characterised in that** the control and regulation electronics are designed such that they use load-side behavioural characteristics of the delivery pressure or of the delivery quantity or a variable from which the latter may be derived, for adapting the power of the pump to the heating installation, and that the control and regulation electronics allocates typical events influencing the heating requirement of the heating installation, to the evaluated behavioural characteristics, and adapts the rotational speed of the pump according to these events.

15. A heating circulation pump according to claim 14, **characterised in that** means for detecting the pressure, preferably the differential pressure between the suction side and the pressure side, the throughflow quantity and/or the temperature of the delivery medium are provided.

16. A heating circulation pump according to one of the claims 14 or 15, **characterised in that** the activation is effected with rotational speeds which are different from the current operating point, over a time period from one to thirty minutes.

17. A heating circulation pump according to one of the claims 14 to 16, **characterised in that** the control and regulation electronics comprise means for determining installation-side changes, and for allocating these changes to a predefined number of change patterns.

18. A heating circulation pump according to one of the claims 14 to 17, **characterised in that** the control and regulation electronics comprise means for temporally differentiating the evaluated installation-side changes.

19. A heating circulation pump according to one of the claims 14 to 18, **characterised in that** means are provided which divide installation-side changes into preferably three categories, specifically into longterm, mid-term and short-term changes.

20. A heating circulation pump according to one of the claims 14 to 19, **characterised in that** the control and regulation electronics are preferably arranged as a module in the terminal box of the assembly.

## Revendications

1. Procédé pour contrôler une pompe de circulation de chauffage à régime réglable, dans lequel on enregistre au moins la pression de refoulement ou le débit ou une grandeur, de laquelle ces derniers paramètres peuvent être déduits, et l'on utilise commander, la pompe de circulation de chauffage en fonction de l'installation, **caractérisé en ce que**, pour adapter de la puissance de la pompe à l'installation de chauffage, on a recours à une caractéristique de fonctionnement côté consommateur de la pression de refoulement ou du débit ou d'une grandeur, de laquelle ces derniers paramètres être déduits, et **en ce qu'**on associe des événements caractéristiques, influençant les besoins en chaleur de l'installation de chauffage, à la caractéristique de fonctionnement communiquée et **en ce qu'**on adapte le régime de la pompe en fonction de ces événements.

2. Procédé selon la revendication 1, **caractérisé en ce que**, lorsqu'on enregistre une variation de pression périodique, on commande le groupe de pompe à un régime plus faible.

3. Procédé selon l'une des revendications précédentes, **caractérisé en ce que**, dans le cas d'une variation de pression rapide dans une plage inférieure à cinq, de préférence inférieure à une minute, on abaisse le régime en cas d'élévation de pression et on l'élève en cas de baisse de pression.

4. Procédé selon l'une des revendications précédentes, **caractérisé en ce que**, dans le cas d'une variation de pression moyennement rapide dans une plage comprise entre six minutes et cinq heures, on abaisse le régime en cas d'élévation de pression pendant l'élévation de pression et abaisse le régime, en cas de baisse de pression, au moins temporairement pendant la baisse de pression.

5. Procédé selon l'une des revendications précédentes, **caractérisé en ce que**, dans le cas d'une lente variation de pression dans la plage située entre six mois et un an, on abaisse le régime en cas d'élévation de pression et on l'élève en cas de caisse de pression.

6. Procédé selon l'une des revendications précédentes, **caractérisé en ce qu'**on choisit la variation de régime en fonction de l'amplitude et/ou de la nature de l'événement communiqué.

7. Procédé selon l'une des revendications précédentes, **caractérisé en ce qu'**on commande la pompe à au moins deux régimes différents en succession avec communication d'au moins une valeur caractéristique côté installation de chauffage.

8. Procédé selon l'une des revendications précédentes, **caractérisé en ce qu'**on choisit les régimes de telle sorte qu'on a une sous-alimentation de l'installation de chauffage lors du régime inférieur et une suralimentation lors du régime supérieur.

9. Procédé selon l'une des revendications précédentes, **caractérisé en ce que** le premier régime commandé correspond à un point de fonctionnement prévisible, adapté au besoin de l'installation et qu'on choisit le régime commandé consécutivement de telle sorte qu'on a un écart, approprié à l'analyse de l'installation, par rapport au point de fonctionnement antérieur.

10. Procédé selon l'une des revendications précédentes, **caractérisé en ce qu'**on commande la pompe avec communication d'un blocage de débit, de préférence avec un régime croissant à partir de zéro ou tombant à zéro et **en ce que** la plage de régime, dans laquelle aucun débit n'est communiqué, est bloquée côté commande dans la zone caractéristique de la pompe.

11. Procédé selon l'une des revendications précédentes, **caractérisé en ce que**, pour la commande de puissance, on utilise en supplément la température ou l'évolution de la température du milieu transporté.

12. Procédé selon l'une des revendications précédentes, **caractérisé en ce qu'**on utilise des informations climatiques et/ou temporelles supplémentaires sont utilisées pour la commande de puissance.

13. Procédé selon l'une des revendications précédentes, **caractérisé en ce qu'**on répète à un intervalle d'un jour ou de plusieurs jours la communication d'au moins une valeur caractéristique côté installation de chauffage et l'adaptation consécutive de la commande de pompe.

14. Pompe de circulation de chauffage entraînée par moteur électrique avec une électronique de commande et de régulation pour la mise en oeuvre du procédé selon l'une des revendications précédentes, **caractérisée en ce que** l'électronique de commande et de régulation est réalisée de telle sorte que, pour adapter de puissance de la pompe à l'installation de chauffage, elle a recours à une caractéristique de fonctionnement côté consommateur de la pression de refoulement ou du débit ou d'une grandeur de laquelle ces derniers paramètres peuvent être déduits et **en ce que** l'électronique de commande et de régulation associe des évènements caractéristiques influençant le besoins en chaleur de l'installation de chauffage à la caractéristique de fonctionnement communiquée et adapte le régime de la pompe en fonction de ces événements.

15. Pompe de circulation de chauffage selon la revendication 14, **caractérisée en ce que** des moyens pour enregistrer la pression, de préférence la pression différentielle entre le côté aspiration et le côté refoulement, le débit et/ou de température du milieu transporté sont prévus.

16. Pompe de circulation de chauffage selon l'une des revendications 14 ou 15, **caractérisée en ce que** la commande s'effectue avec des régimes se différenciant du point de fonctionnement actuel sur une période d'une à trente minutes.

17. Pompe de circulation de chauffage selon l'une des revendications 14 à 16, **caractérisée en ce que** l'électronique de commande et de régulation présente des moyens pour déterminer des variations côté installation et pour associer ces variations à un nombre prédéfini de modèles de variation.

18. Pompe de circulation de chauffage selon l'une des revendications 14 à 17, **caractérisée en ce que** l'électronique de commande et de régulation présente des moyens pour différencier dans le temps les variations côté installation communiquées.

19. Pompe de circulation de chauffage selon l'une des revendications 14 à 18, **caractérisée en ce que** des moyens sont prévus, qui divisent les variations côté installation de préférence en trois catégories, à savoir en variations à long terme, à moyen terme et à court terme.

20. Pompe de circulation de chauffage selon l'une des revendications 14 à 19, **caractérisée en ce que** l'électronique de commande et de régulation est disposée de préférence sous forme de module dans la boîte à bornes du groupe.
